# EUROPEAN PATENT APPLICATION

(11) **EP 4 806 265 A1**
(43) Date of publication of application: **16.09.2026**
(21) Application number: 24935721.1
(22) Date of filing: 10.12.2024
(51) Int. Cl.: A01N 35/10, A01N 25/04, A01N 25/30

(54) **CLETHODIM EMULSIFIABLE CONCENTRATE, AND PREPARATION METHOD THEREFOR AND USE THEREOF**

(30) Priority: 17.04.2024 CN 202410462209
(71) Applicant: Jiangsu Yunfan Chemical Co., Ltd., Nantong, Jiangsu 226200 (CN)
(72) Inventor: LU, Xuelin, Nantong, Jiangsu 226200 (CN); WANG, Pandeng, Nantong, Jiangsu 226200 (CN); WU, Haiqin, Nantong, Jiangsu 226200 (CN); WU, Kechong, Nantong, Jiangsu 226200 (CN); WU, Guanzhong, Nantong, Jiangsu 226200 (CN); JIA, Junchao, Nantong, Jiangsu 226200 (CN)
(74) Representative: Bayramoglu et al.
(86) International application number: PCT/CN2024/137978
(87) International publication number: WO 2025/218193

(57) **Abstract**

The present disclosure provides a clethodim emulsifiable concentrate (EC) and a preparation method and use thereof. The clethodim EC includes a clethodim technical material, an anionic surfactant composition (including an anionic surfactant A and an anionic surfactant B), a nonionic surfactant, etc. The present disclosure belongs to the technical field of agricultural herbicides. In the clethodim EC provided by the present disclosure, a specific anionic surfactant combination and a nonionic surfactant are used in combination without a stabilizer, which can well control the cost, allows a low decomposition rate of the active ingredient, and is environmentally friendly. Moreover, the clethodim EC has superior efficacy to the clethodim ECs currently on the market. The clethodim EC provided by the present disclosure has characteristics such as favorable appearance, excellent EC stability, low active ingredient decomposition rate, high efficacy, and low cost, making the clethodim EC have a promising prospect for market promotion and application.

## Description

### TECHNICAL FIELD

The present disclosure relates to a clethodim emulsifiable concentrate (EC) and a preparation method and use thereof, and belongs to the technical field of agricultural herbicides.

### BACKGROUND TECHNOLOGY

Clethodim, also known as Seroxat, is a cyclohexanedione herbicide with excellent herbicidal activity. A chemical name of clethodim is 2-{1-[(3-chloro-2-propenyl)oxy]iminopropyl}-5-[2-(ethylthio)propyl]-3-hydroxy-2-cyclohexen-1-one. Clethodim exhibits a strong killing ability against a variety of annual and perennial weeds. Clethodim is primarily suitable for weed control in the farmland of more than 40 crops such as *Glycine max* (L.) Merr., *Linum usitatissimum* L., *Nicotiana tabacum* L., and *Citrullus lanatus* (Thunb.) Matsum. et Nakai. Clethodim can control over 30 species of gramineous weeds including *Echinochloa crus-galli* (L.) P. Beauv. Clethodim is widely used in agricultural production and has a huge economic market value.

Since the molecular structure of clethodim itself includes various non-adjacent carbon-carbon double bonds and functional groups such as oxime, the structural characteristics of clethodim make clethodim have poor stability and prone to configuration inversion under external conditions. Moreover, clethodim is highly sensitive to ultraviolet light, heat, strong acids, strong alkalies, pH values, and polar compounds, and can be decomposed at a temperature lower than a boiling point of clethodim. Due to the instability and easy decomposition of the clethodim technical material, the current clethodim EC products available on the market are mainly in a dosage form of 240EC, which has a decomposition rate of about 10% during storage. The decomposition rates of 360EC and 480EC during storage both are more than 10%, which results in a loss of efficacy, waste of resources, and unnecessary environmental pollution. The higher the clethodim content in a dosage form, the easier the dosage form is to decompose. Therefore, it is relatively rare for clethodim ECs with high contents on the market to be commercially produced on a large scale, such as 360EC or 480EC. However, when a content of the clethodim technical material in a dosage form is high, the relative production, transportation, and packaging costs all can be greatly diminished, and the consumption of solvents can also be significantly reduced to reduce the environmental pollution. Therefore, the development of a clethodim EC with a high content that meets the application requirements of commercial ECs is of great economic and environmental significance.

The current EC formulations of clethodim typically include components such as an anionic surfactant, a nonionic surfactant, a stabilizer, a synergist, and a solvent, which is well known in the industry. Anionic surfactants are polar compounds. To produce a clear EC with excellent stability, it is necessary to add a specified amount of an anionic surfactant to an EC formulation of clethodim, which is also well known in the industry. An anionic surfactant can promote the emulsification of clethodim and the improvement of stability of an EC, but an anionic surfactant, as a polar compound, can also make the active ingredient of clethodim decomposed, which is an objective conflict point.

Currently, the common solution is to achieve the excellent stability and low decomposition rate of an EC by selecting a specific anionic surfactant and a specific stabilizer. However, there are few reports on the research of influence of an anionic surfactant combination on the decomposition rate and efficacy of a clethodim EC. For example, the patent CN102318602B discloses an emulsifying agent playing a stabilizing role in a clethodim EC and a preparation method of the emulsifying agent. This patent adopts a combination of sodium or calcium dodecylbenzenesulfonate as an anionic surfactant and 2,6-di-*tert*-butyl-4-methylphenol as a stabilizer. The patent CN106070210A discloses a clethodim oil-dispersible suspension with high stability and a preparation method thereof. This patent adopts a combination of a lignosulfonate or an alkyl naphthalene sulfonate as an anionic surfactant and an oil-soluble antioxidant as a stabilizer. The patent CN107581188A discloses a clethodim EC and a preparation method thereof. This patent adopts a combination of sodium or calcium dodecylbenzenesulfonate as an anionic surfactant and *N*,*N'*-disalicylidene-1,3-diaminopropane as a stabilizer. The above patents mainly focus on the decomposition rates of clethodim EC products, and there is little about the efficacy. The patent CN115669659B discloses a clethodim EC and a preparation method and use thereof. This patent adopts a combination of calcium alkyl benzene sulfonate or a sulfosuccinate as an anionic surfactant and 4,4'-thiobis(6-*tert*-butyl-3-methylphenol) as a stabilizer. In this patent, the efficacy of the clethodim EC is described, but the clethodim EC still has a relatively high decomposition rate of about 4.1% to 4.6%. Moreover, in this patent, the specific stabilizer of 4,4'-thiobis(6-*tert*-butyl-3-methylphenol) needs to be used at a relatively large amount. The stabilizer is relatively expensive, which increases the production cost and is unfavorable for commercial production. The sulfur-containing stabilizer is not eco-friendly.

The current challenge lies in the selection of an anionic surfactant particularly suitable for a clethodim EC system and a specific proportion of the anionic surfactant and the reduction of a decomposition rate of the EC with the emulsification and stability of the EC controlled to meet the application requirements of commercial clethodim ECs. It is particularly difficult in the case of high-content clethodim ECs, which directly leads to the relatively limited large-scale commercial production of the current high-content clethodim ECs, such as 360EC or 480EC. To address the decomposition of clethodim ECs, especially the decomposition of high-content clethodim ECs, and to meet the application requirements of commercial clethodim ECs, the selection of a surfactant in a product formulation is of great importance, which is particularly true for the selection of an anionic surfactant and the selection of an amount and proportion of the anionic surfactant. The decomposition rate of the active ingredient can be reduced by selecting a specific surfactant and controlling a specific content of the surfactant.

Therefore, there is an urgent need in the art to develop a clethodim EC that is not easily decomposed at a high concentration, has a low cost, and is eco-friendly.

### CONTENT OF THE INVENTION

An objective of the present disclosure is to solve the problem that the clethodim EC in the prior art exhibits a high decomposition rate at a high concentration, has a high cost, and is not eco-friendly.

In order to achieve the objective to solve the above problem, a technical solution adopted by the present disclosure is to provide a clethodim EC and a preparation method and use thereof.

A first aspect of the present disclosure provides a clethodim EC, including the following components:

| | |
|---|---|
| a clethodim technical material | 5% to 60%; |
| an anionic surfactant A | 0.1% to 5.0%; |
| an anionic surfactant B | 0.1% to 5.0%; |
| a nonionic surfactant | 1% to 20%; |
| a synergist | 0.0% to 6.0%; and |
| a solvent | 4% to 93.8%, |

where each percentage represents a mass percentage; the anionic surfactant A is selected from an alkali metal salt and an alkaline earth metal salt of an alkyl aryl sulfonate with a linear or branched alkyl chain; and the anionic surfactant B is selected from a sodium sulfosuccinate diester.

Preferably, a content of each component is as follows:

| | |
|---|---|
| the clethodim technical material | 10% to 60%; |
| the anionic surfactant A | 0.1% to 2.0%; |
| the anionic surfactant B | 0.1% to 4.0%; |
| the nonionic surfactant | 5.0% to 10.0%; |
| the synergist | 0.1% to 3.0%; and |
| the solvent | 21.0% to 84.7%, |

where each percentage represents a mass percentage; the anionic surfactant A is selected from an alkali metal salt and an alkaline earth metal salt of an alkyl aryl sulfonate with a linear or branched alkyl chain; and the anionic surfactant B is selected from a sodium sulfosuccinate diester.

Preferably, a mass ratio of the anionic surfactant A to the anionic surfactant B is 1:(0.5-5.0).

Preferably, the anionic surfactant A is sodium benzenesulfonate with a C₁₀-C₂₀ alkyl chain or calcium benzenesulfonate with a C₁₀-C₂₀ alkyl chain. Further preferably, the anionic surfactant A is sodium dodecylbenzenesulfonate, sodium cetylbenzenesulfonate, sodium octadecylbenzenesulfonate, calcium dodecylbenzenesulfonate, calcium cetylbenzenesulfonate, or calcium octadecylbenzenesulfonate.

Preferably, the anionic surfactant B is one of sodium diisooctyl sulfosuccinate (docusate sodium, CAS: 577-11-7), sodium dibutyl sulfosuccinate, and sodium 1,4-diisodecyl sulfosuccinate.

Preferably, the nonionic surfactant is at least one of castor oil polyoxyethylene ether (CAS: 61791-12-6), rice bran oil polyoxyethylene ether, and dibenzyl biphenyl polyoxyethylene ether (agricultural milk 300). Particularly preferably, the nonionic surfactant is at least one of castor oil polyoxyethylene ether EL-20, castor oil polyoxyethylene ether EL-40, and the dibenzyl biphenyl polyoxyethylene ether (agricultural milk 300).

Preferably, the synergist is C₈-C₁₆ fatty alcohol polyoxyethylene ether (CAS: 111-09-3). Particularly preferably, the synergist is at least one of fatty alcohol polyoxyethylene ether AEO-9, fatty alcohol polyoxyethylene ether AEO-10, and fatty alcohol polyoxyethylene ether AEO-12.

Preferably, the solvent is a solvent oil. Particularly preferably, the solvent is at least one of a 150# solvent oil and a 200# solvent oil.

A second aspect of the present disclosure provides a preparation method of the clethodim EC described above, including the following steps: thoroughly mixing the clethodim technical material with the solvent in the specified proportions to produce a solution, adding the synergist, the nonionic surfactant, the anionic surfactant A, and the anionic surfactant B in the specified proportions to the solution, fully stirring for thorough mixing, and filtering to produce a transparent and clear clethodim EC.

A third aspect of the present disclosure provides a use of the clethodim EC described above in control of a plurality of gramineous weeds.

Compared with the prior art, the present disclosure has the following beneficial effects:
1. In the present disclosure, the anionic surfactant A is an alkali metal salt or alkaline earth metal salt of an alkyl aryl sulfonate with a linear or branched alkyl chain. The emulsifying properties of this anionic surfactant such as sodium dodecylbenzenesulfonate are particularly suitable for clethodim ECs, and contribute to the clarification of a clethodim EC. When the anionic surfactant A is not added at all, a resulting clethodim EC tends to be turbid. In addition, the anionic surfactant A cannot be added at an excess amount. If a content of the anionic surfactant A is too high, a decomposition rate of a resulting clethodim EC will increase significantly. The anionic surfactant A can be added at a small amount, is inexpensive, has sufficient sources of industrial products, and can be produced in a large quantity, which is conducive to the industrialization of the clethodim EC.
2. The anionic surfactant B adopted in the present disclosure is a sodium sulfosuccinate diester, which is a substance characterized by a structure with double hydrophobic tails and a hydrophilic branched chain. Surprisingly, the present disclosure has found that, although the anionic surfactant B is also a polar substance, the anionic surfactant B exhibits a significantly smaller impact on a decomposition rate of clethodim than the anionic surfactant A. The anionic surfactant B has the dual functions of stabilizing a quality of the clethodim EC and controlling a low decomposition rate of the clethodim EC. The anionic surfactant B works in concert with other components such as specific nonionic surfactants to achieve excellent results. Thus, the anionic surfactant B is particularly suitable for clethodim EC systems prone to decomposition.
3. In the present disclosure, a specific anionic surfactant combination is adopted and the contents and ratio of anionic surfactants are controlled to produce a clear clethodim EC with excellent stability and a low decomposition rate (lower than 4.0%) during heat storage. Surprisingly, in the embodiments of the present disclosure, a 48% clethodim EC (480EC) product has a decomposition rate as low as 3.2% during heat storage and a decomposition rate as low as 1.4% during 12-month room-temperature storage. Moreover, a stabilizer is not required, which allows the well cost control. The absence of the sulfur-containing stabilizer leads to environmental friendliness. The clethodim EC of the present disclosure has superior efficacy to the existing clethodim ECs currently on the market.
4. The clethodim EC provided by the present disclosure has characteristics such as favorable appearance, excellent EC stability, low active ingredient decomposition rate, high efficacy, and low cost, making the clethodim EC have a promising prospect for market promotion and application.

### DESCRIPTION OF THE DRAWINGS

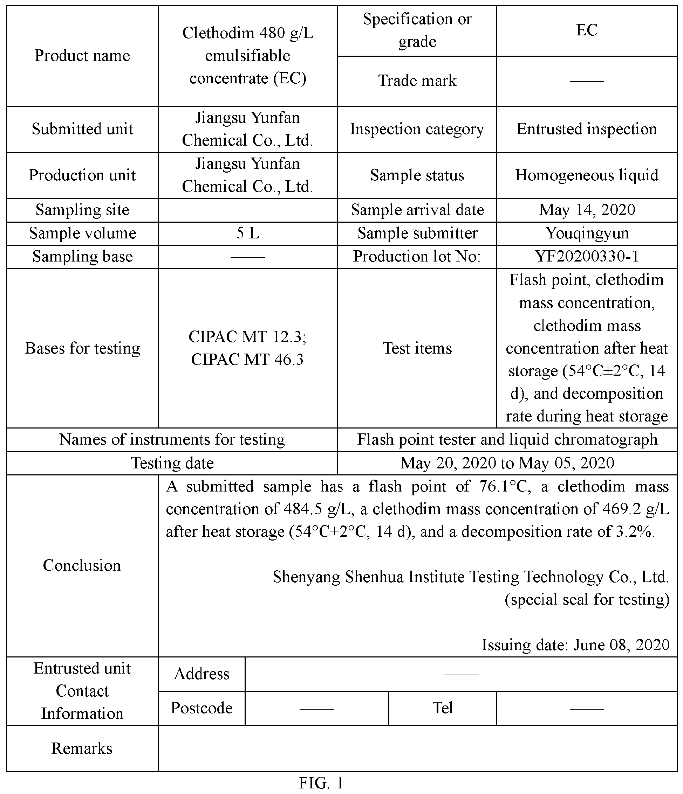

FIG. 1 is a decomposition rate analysis report for a clethodim EC in Example 6; and

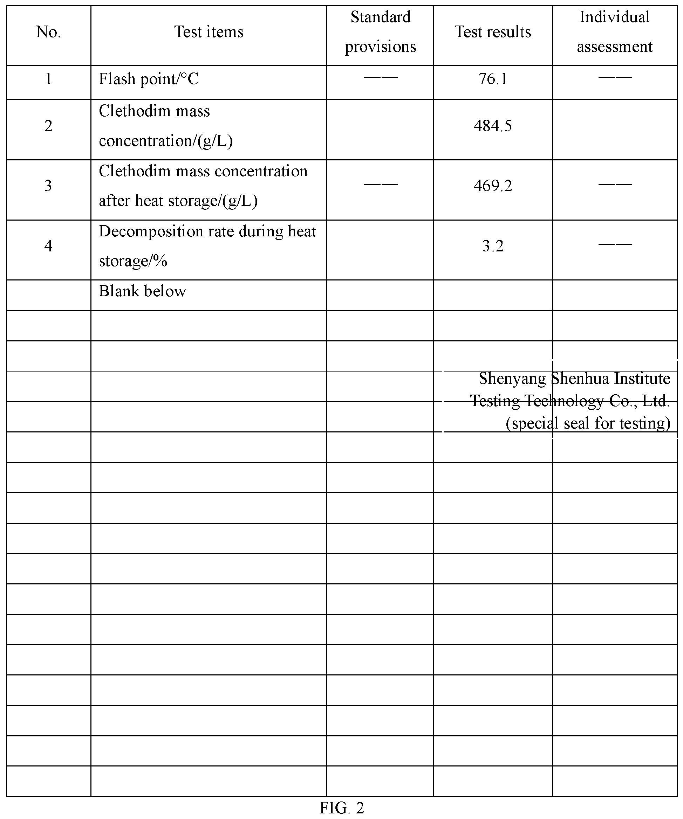

FIG. 2 is a flash point analysis report for the clethodim EC in Example 6.

### SPECIFIC IMPLEMENTATIONS

To make the present disclosure easily understood, the present disclosure will be described below through the following examples. These examples are provided merely for an illustrative purpose, and are not intended to limit the scope of the disclosure.

### Formulation examples

### Example 1: Preparation of 24% clethodim EC

According to the components listed for the formulation in Table 1, the clethodim was thoroughly mixed with the solvent to produce a solution, and the synergist, the nonionic surfactant, and the anionic surfactants were added to the solution. Stirring was fully conducted for thorough mixing, and filtration was conducted to produce a transparent and clear clethodim EC.

**Table 1 Components of 24% clethodim EC**

| Content | Weight, % | Function |
|---|---|---|
| Clethodim | 24 | Active ingredient |
| Sodium dodecylbenzenesulfonate | 1.5 | Anionic surfactant A |
| Sodium dibutyl sulfosuccinate | 2.0 | Anionic surfactant B |
| Dibenzyl biphenyl polyoxyethylene ether (agricultural milk 300) | 6.5 | Nonionic surfactant |
| Fatty alcohol polyoxyethylene ether AEO-10 | 2.0 | Synergist |
| 200# solvent oil | 64.0 | Solvent |

### Example 2: Preparation of 36% clethodim EC

According to the components listed for the formulation in Table 2, the clethodim was thoroughly mixed with the solvent to produce a solution, and the synergist, the nonionic surfactant, and the anionic surfactants were added to the solution. Stirring was fully conducted for thorough mixing, and filtration was conducted to produce a transparent and clear clethodim EC.

**Table 2 Components of 36% clethodim EC**

| Content | Weight, % | Function |
|---|---|---|
| Clethodim | 36 | Active ingredient |
| Calcium dodecylbenzenesulfonate | 1.2 | Anionic surfactant A |
| Docusate sodium | 3.0 | Anionic surfactant B |
| Dibenzyl biphenyl polyoxyethylene ether (agricultural milk 300) | 6.8 | Nonionic surfactant |
| Fatty alcohol polyoxyethylene ether AEO-9 | 2.0 | Synergist |
| 150# solvent oil | 51.0 | Solvent |

### Example 3: Preparation of 36% clethodim EC

According to the components listed for the formulation in Table 3, the clethodim was thoroughly mixed with the solvent to produce a solution, and the synergist, the nonionic surfactant, and the anionic surfactants were added to the solution. Stirring was fully conducted for thorough mixing, and filtration was conducted to produce a transparent and clear clethodim EC.

**Table 3 Components of 36% clethodim EC**

| Content | Weight, % | Function |
|---|---|---|
| Clethodim | 36 | Active ingredient |
| Calcium dodecylbenzenesulfonate | 1.0 | Anionic surfactant A |
| Docusate sodium | 2.0 | Anionic surfactant B |
| Castor oil polyoxyethylene ether EL-40 | 8.0 | Nonionic surfactant |
| Fatty alcohol polyoxyethylene ether AEO-10 | 2.0 | Synergist |
| 150# solvent oil | 51.0 | Solvent |

### Example 4: Preparation of 36% clethodim EC

According to the components listed for the formulation in Table 4, the clethodim was thoroughly mixed with the solvent to produce a solution, and the synergist, the nonionic surfactant, and the anionic surfactants were added to the solution. Stirring was fully conducted for thorough mixing, and filtration was conducted to produce a transparent and clear clethodim EC.

**Table 4 Components of 36% clethodim EC**

| Content | Weight, % | Function |
|---|---|---|
| Clethodim | 36 | Active ingredient |
| Sodium cetylbenzenesulfonate | 1.0 | Anionic surfactant A |
| Docusate sodium | 2.5 | Anionic surfactant B |
| Castor oil polyoxyethylene ether EL-20 | 9.0 | Nonionic surfactant |
| Fatty alcohol polyoxyethylene ether AEO-12 | 2.5 | Synergist |
| 150# solvent oil | 49.0 | Solvent |

### Example 5: Preparation of 48% clethodim EC

According to the components listed for the formulation in Table 5, the clethodim was thoroughly mixed with the solvent to produce a solution, and the synergist, the nonionic surfactant, and the anionic surfactants were added to the solution. Stirring was fully conducted for thorough mixing, and filtration was conducted to produce a transparent and clear clethodim EC.

**Table 5 Components of 48% clethodim EC**

| Content | Weight, % | Function |
|---|---|---|
| Clethodim | 48 | Active ingredient |
| Sodium octadecylbenzenesulfonate | 0.8 | Anionic surfactant A |
| Sodium 1,4-diisodecyl sulfosuccinate | 2.2 | Anionic surfactant B |
| Dibenzyl biphenyl polyoxyethylene ether (agricultural milk 300) | 8.0 | Nonionic surfactant |
| Fatty alcohol polyoxyethylene ether AEO-10 | 2.0 | Synergist |
| 150# solvent oil | 39.0 | Solvent |

### Example 6: Preparation of 48% clethodim EC

According to the components listed for the formulation in Table 6, the clethodim was thoroughly mixed with the solvent to produce a solution, and the synergist, the nonionic surfactant, and the anionic surfactants were added to the solution. Stirring was fully conducted for thorough mixing, and filtration was conducted to produce a transparent and clear clethodim EC.

**Table 6 Components of 48% clethodim EC**

| Content | Weight, % | Function |
|---|---|---|
| Clethodim | 48 | Active ingredient |
| Calcium cetylbenzenesulfonate | 0.8 | Anionic surfactant A |
| Docusate sodium | 2.2 | Anionic surfactant B |
| Castor oil polyoxyethylene ether EL-20 | 9.0 | Nonionic surfactant |
| Fatty alcohol polyoxyethylene ether AEO-9 | 2.0 | Synergist |
| 150# solvent oil | 38.0 | Solvent |

### Example 7: Preparation of 48% clethodim EC

According to the components listed for the formulation in Table 7, the clethodim was thoroughly mixed with the solvent to produce a solution, and the nonionic surfactant and the anionic surfactants were added to the solution. Stirring was fully conducted for thorough mixing, and filtration was conducted to produce a transparent and clear clethodim EC.

**Table 7 Components of 48% clethodim EC**

| Content | Weight, % | Function |
|---|---|---|
| Clethodim | 48 | Active ingredient |
| Calcium cetylbenzenesulfonate | 0.8 | Anionic surfactant A |
| Docusate sodium | 2.2 | Anionic surfactant B |
| Castor oil polyoxyethylene ether EL-20 | 9.0 | Nonionic surfactant |
| 150# solvent oil | 40.0 | Solvent |

### Formulation comparative examples

### Comparative Example 1: Preparation of 24% clethodim EC (the anionic surfactant A was not added)

According to the components listed for the formulation in Table 8, the clethodim was thoroughly mixed with the solvent to produce a solution, and the synergist, the nonionic surfactant, and the anionic surfactant were added to the solution. Stirring was fully conducted for thorough mixing, and filtration was conducted to produce a clethodim EC.

**Table 8 Components of 24% clethodim EC**

| Content | Weight, % | Function |
|---|---|---|
| Clethodim | 24 | Active ingredient |
| Sodium dodecylbenzenesulfonate | 0.0 | Anionic surfactant A |
| Sodium dibutyl sulfosuccinate | 3.5 | Anionic surfactant B |
| Dibenzyl biphenyl polyoxyethylene ether (agricultural milk 300) | 6.5 | Nonionic surfactant |
| Fatty alcohol polyoxyethylene ether AEO-10 | 2.0 | Synergist |
| 200# solvent oil | 64.0 | Solvent |

### Comparative Example 2: Preparation of 36% clethodim EC (the anionic surfactant B was not added)

According to the components listed for the formulation in Table 9, the clethodim was thoroughly mixed with the solvent to produce a solution, and the synergist, the nonionic surfactant, and the anionic surfactant were added to the solution. Stirring was fully conducted for thorough mixing, and filtration was conducted to produce a transparent and clear clethodim EC.

**Table 9 Components of 36% clethodim EC**

| Content | Weight, % | Function |
|---|---|---|
| Clethodim | 36 | Active ingredient |
| Calcium dodecylbenzenesulfonate | 4.2 | Anionic surfactant A |
| Docusate sodium | 0.0 | Anionic surfactant B |
| Dibenzyl biphenyl polyoxyethylene ether (agricultural milk 300) | 6.8 | Nonionic surfactant |
| Fatty alcohol polyoxyethylene ether AEO-9 | 2.0 | Synergist |
| 150# solvent oil | 51.0 | Solvent |

### Comparative Example 3: Preparation of 36% clethodim EC (the anionic surfactant B was replaced with a stabilizer 2,6-di-tert-butyl-4-methylphenol)

According to the components listed for the formulation in Table 10, the clethodim was thoroughly mixed with the solvent to produce a solution, and the synergist, the nonionic surfactant, the anionic surfactant, and the stabilizer were added to the solution. Stirring was fully conducted for thorough mixing, and filtration was conducted to produce a transparent and clear clethodim EC.

**Table 10 Components of 36% clethodim EC**

| Content | Weight, % | Function |
|---|---|---|
| Clethodim | 36 | Active ingredient |
| Calcium dodecylbenzenesulfonate | 1.0 | Anionic surfactant A |
| 2,6-di-tert-butyl-4-methylphenol | 2.0 | Stabilizer |
| Castor oil polyoxyethylene ether EL-40 | 8.0 | Nonionic surfactant |
| Fatty alcohol polyoxyethylene ether AEO-10 | 2.0 | Synergist |
| 150# solvent oil | 51.0 | Solvent |

### Comparative Example 4: Preparation of 48% clethodim EC (the anionic surfactant B was not added)

According to the components listed for the formulation in Table 11, the clethodim was thoroughly mixed with the solvent to produce a solution, and the stabilizer, the synergist, the nonionic surfactant, and the anionic surfactant were added to the solution. Stirring was fully conducted for thorough mixing, and filtration was conducted to produce a transparent and clear clethodim EC.

**Table 11 Components of 48% clethodim EC**

| Content | Weight, % | Function |
|---|---|---|
| Clethodim | 48 | Active ingredient |
| Calcium cetylbenzenesulfonate | 3.0 | Anionic surfactant A |
| Docusate sodium | 0.0 | Anionic surfactant B |
| Castor oil polyoxyethylene ether EL-20 | 9.0 | Nonionic surfactant |
| Fatty alcohol polyoxyethylene ether AEO-9 | 2.0 | Synergist |
| 150# solvent oil | 38.0 | Solvent |

### Use Example 1: Emulsion stability test for the samples obtained in the examples and comparative Samples

The samples obtained in Examples 1 to 7 and Comparative Examples 1 to 4 and the existing commercially-available products each were subjected to the emulsion stability test according to the following process: A sample was diluted 20-fold with 342 ppm of standard hard water and placed in a 30±1°C thermostatic water bath. The precipitation of oil slicks, floating pastes, and precipitates was recorded at 0.5 h, 2 h, and 24 h, and the re-emulsification at 24.5 h was recorded (results were shown in Table 12).

**Table 12 Emulsion stability test results**

| Sample No. | 0.5 h | 2 h | 24 h | Re-emulsification at 24.5 h | Remarks |
|---|---|---|---|---|---|
| Example 1 | Prominent | Prominent | 0.5 mL of EC | Prominent | |
| Example 2 | Prominent | Prominent | 0.5 mL of an emulsifiable paste | Prominent | |
| Example 3 | Prominent | Prominent | 0.5 mL of EC | Prominent | |
| Example 4 | Prominent | Prominent | 0.5 mL of an emulsifiable paste | Prominent | |
| Example 5 | Prominent | Prominent | 1 mL of an emulsifiable paste | Prominent | |
| Example 6 | Prominent | Prominent | 1 mL of EC | Prominent | |
| Example 7 | Prominent | Prominent | 1 mL of EC | Prominent | |
| Comparative Example 1 | Turbid | Turbid | Turbid | Turbid | Turbid sample |
| Comparative Example 2 | Prominent | Prominent | 0.5 mL of EC | Prominent | |
| Comparative Example 3 | Prominent | Prominent | 0.5 mL of EC | Prominent | |
| Comparative Example 4 | Prominent | Prominent | 1 mL of EC | Prominent | |
| Commercially-available clethodim 240EC (Shenyang Kechuang Chemical Co., Ltd.) | Prominent | Prominent | 2 mL of an emulsifiable paste | Prominent | |
| Commercially-available clethodim 360EC (Sumitomo Chemical) | Prominent | Prominent | 2 mL of an emulsifiable paste | Prominent | |

It can be seen from Table 12 that the samples in the examples and comparative examples other than Comparative Example 1 all exhibit excellent emulsion stability, and meet the emulsion stability requirements in the standard of the Food and Agriculture Organization (FAO). The sample in Comparative Example 1 without the anionic surfactant A is turbid, indicating that the anionic surfactant A is conducive to the clarification of clethodim EC.

### Use Example 2: Comparison of stability during heat storage

The samples obtained in Examples 1 to 7 and Comparative Examples 2 to 4 and the existing commercially-available products each were tested for stability during heat storage according to the following process: All samples were sealed with ampoules, and a heat storage experiment was carried out. The samples were stored for 14 d in an incubator at 54±2°C. A change in a content of the active ingredient before and after heat storage was analyzed and detected by high-performance liquid chromatography (results were shown in Table 13).

**Table 13 Test results of emulsion stability during heat storage**

| Sample No. | Content before heat storage | Content after heat storage | Decomposition rate during heat storage |
|---|---|---|---|
| Example 1 | 24.0% | 23.7% | 1.3% |
| Example 2 | 36.1% | 35.2% | 2.5% |
| Example 3 | 36.0% | 35.2% | 2.2% |
| Example 4 | 36.1% | 35.4% | 1.9% |
| Example 5 | 48.1% | 46.4% | 3.5% |
| Example 6 | 48.4% | 46.9% | 3.2% |
| Example 7 | 48.2% | 46.5% | 3.5% |
| Comparative Example 2 | 36.0% | 32.6% | 9.4% |
| Comparative Example 3 | 36.1% | 33.1% | 8.3% |
| Comparative Example 4 | 48.0% | 42.1% | 12.3% |
| Commercially-available clethodim 240EC (Shenyang Kechuang Chemical Co., Ltd.) | 24.1% | 21.6% | 10.4% |
| Commercially-available clethodim 360EC (Sumitomo Chemical) | 37.4% | 34.6% | 7.5% |

According to the data results in Table 13, the clethodim EC products with different contents in Examples 1 to 7 that each are prepared with a specific anionic surfactant combination and a nonionic surfactant all have a decomposition rate of less than 4.0% after being stored at 54±2°C for 14 d, which is significantly lower than the decomposition rates of the commercially-available 240EC clethodim EC and the commercially-available 360EC clethodim EC during heat storage. According to the comparison of Examples 2, 3, and 6 with Comparative Examples 2, 3, and 4, respectively, under the same formulation system, a formulation with the anionic surfactant B has a significantly lower heat-storage decomposition rate than a formulation without the anionic surfactant B. Moreover, the anionic surfactant A cannot be added at a too large amount. When the anionic surfactant B is not added and the anionic surfactant A is added in a mass percentage of 4.2% in Comparative Example 2, a decomposition rate of resulting clethodim EC significantly increases. When the common stabilizer such as 2,6-di-*tert*-butyl-4-methylphenol is used instead of the anionic surfactant B, a resulting formulation also has a significantly higher heat-storage decomposition rate than a formulation with the anionic surfactant B. It indicates that the anionic surfactant B can very effectively inhibit the decomposition of the active ingredient in a clethodim EC product to allow a low decomposition rate of clethodim.

### Use Example 3: Stability of clethodim 480EC during room-temperature storage

The samples obtained in Examples 6 and 7 each were tested for stability during long-term room-temperature storage according to the following process: All samples were sealed with ampoules, and a long-term room-temperature storage experiment was carried out. 5 samples of different weights were taken from each of Examples 6 and 7 and placed in an incubator at a temperature of 22°C±2°C and a relative humidity of 60%±10% for 12 months. Sampling was conducted once every 3 months for testing, that is, the testing was conducted at month 0, month 3, month 6, month 9, and month 12. A change in a content of the active ingredient before and after room-temperature storage was analyzed and detected by high-performance liquid chromatography (results were shown in Table 14).

**Table 14 Test results of stability of clethodim 480EC during room-temperature storage**

| Sample No. | Test time | Sample weight before storage | Sample weight after storage | Content before room-temperature storage | Content after room-temperature storage | Decomposition rate during room-temperature storage |
|---|---|---|---|---|---|---|
| Example 6 | Month 0 | 70.80 g | - | 48.4% | - | - |
| Example 6 | Month 3 | 76.34 g | 76.34 g | 48.4% | 48.4% | 0 |
| Example 6 | Month 6 | 83.10 g | 83.10 g | 48.4% | 48.1% | 0.6% |
| Example 6 | Month 9 | 78.81 g | 78.81 g | 48.4% | 47.9% | 1.0% |
| Example 6 | Month 12 | 80.36 g | 80.36 g | 48.4% | 47.7% | 1.4% |
| Example 7 | Month 0 | 70.80 g | - | 48.2% | - | - |
| Example 7 | Month 3 | 76.34 g | 76.34 g | 48.2% | 48.2% | 0 |
| Example 7 | Month 6 | 83.10 g | 83.10 g | 48.2% | 47.9% | 0.6% |
| Example 7 | Month 9 | 78.81 g | 78.81 g | 48.2% | 47.6% | 1.2% |
| Example 7 | Month 12 | 80.36 g | 80.36 g | 48.2% | 47.5% | 1.5% |

According to the data results in Table 14, the clethodim 480EC products in Examples 6 and 7 that each are prepared with a specific anionic surfactant combination and a nonionic surfactant all have a decomposition rate of less than or equal to 1.5% after being stored at 22±2°C for 12 months. It indicates that the clethodim EC of the present disclosure, especially the high-content clethodim EC, has a low decomposition rate during room-temperature storage. This is very favorable for the extension of a shelf life of clethodim EC during room-temperature storage, and is also conducive to reducing the cost of transportation, such as the cost of low-temperature transportation.

### Use Example 4: Test to determine the laboratory biological activities of different clethodim EC samples against gramineous weeds

The clethodim EC samples prepared in Examples 2, 3, and 4 and the commercially-available clethodim 360EC, a total of 4 samples, each were tested for laboratory biological activities against gramineous weeds.

Test method: The test was conducted according to the Pesticides Guidelines for Laboratory Bioactivity Tests Part 4: Foliar Spray Application Test for Herbicide Activity (NY/T 1155.4-2006).

Test targets: *Echinochloa crus-galli* and *Digitaria sanguinalis*.

Test agents adopted in this laboratory biological activity assay test were listed in Table 15.

**Table 15 Test agents**

| **Agent** | **Code - name** | **Source of a sample** |
|---|---|---|
| Test agents | Formulation 1 - clethodim EC in Example 2 | The clethodim EC samples are prepared by the preparation method of the present disclosure |
| | Formulation 2 - clethodim EC in Example 3 | |
| | Formulation 3 - clethodim EC in Example 4 | |
| Control agent | Formulation 4 - commercially-available clethodim 360EC (Sumitomo Chemical) | Content: 36.1% |

### Test results:

7 d after the application, it was observed visually that, for *Echinochloa crus-galli* treated with the formulations 1 to 3 at 160 mL/ hm², some plants were withered, and for *Echinochloa crus-galli* treated with the formulations 1 to 3 at 80 mL/ hm², leaves were de-greened, where there was no significant difference among the treatments. Except for the blank control, all of the treated *Digitaria sanguinalis* plants were lodging, and it was observed visually that there was no significant difference among the treatments.

11 d after the application, it was observed visually that the formulations 2 and 3 exhibited a slightly better control effect for *Echinochloa crus-galli* than other formulations, where the formulation 3 was slightly better than the formulation 2. The formulations were not much different from each other in terms of a control effect for *Digitaria sanguinalis*, where the formulation 3 was slightly better than the formulation 1.

14 d after the application, it was observed visually that the formulation 3 exhibited a slightly better control effect for *Echinochloa crus-galli* than the formulations 2 and 4, and the formulation 3 also exhibited a slightly better control effect for *Digitaria sanguinalis* than the formulations 2 and 4. The visual grading for each treatment was shown in Table 16.

**Table 16 Visual grading for weeds on day 14 after application**

| **Agent** | **Application amount mL/hm²** | **Grading** | |
|---|---|---|---|
| | | ***Echinochloa crus-galli*** | ***Digitaria sanguinalis*** |
| 360 g/L Clethodim EC Formulation 1 | 40 | 9 | 9 |
| | 80 | 8 | 8 |
| | 160 | 7 | 7 |
| 360 g/L Clethodim EC Formulation 2 | 40 | 9 | 9 |
| | 80 | 7 | 8 |
| | 160 | 6 | 7 |
| 360 g/L Clethodim EC Formulation 3 | 40 | 8 | 8 |
| | 80 | 7 | 8 |
| | 160 | 6 | 7 |
| 360 g/L Clethodim EC Formulation 4 | 40 | 8 | 8 |
| | 80 | 8 | 8 |
| | 160 | 6 | 7 |

| | | | |
|---|---|---|---|
| Grade 1: All die. Grade 2: Equivalent to 0% to 2.5% of a blank control region. Grade 3: Equivalent to 2.6% to 5% of the blank control region. Grade 4: Equivalent to 5.1% to 10% of the blank control region. Grade 5: Equivalent to 10.1% to 15% of a blank control region. Grade 6: Equivalent to 15.1% to 25% of the blank control region. Grade 7: Equivalent to 25.1% to 35% of the blank control region. Grade 8: Equivalent to 35.1% to 67.5% of the blank control region. Grade 9: Equivalent to 67.6% to 100% of the blank control region. | | | |

21 d after the application, a fresh weight of an aboveground part of a test weed was measured, and a fresh weight inhibition rate was calculated. Results were shown in Table 17. 360 g/L clethodim EC exhibited a better control effect for *Echinochloa crus-galli* than for *Digitaria sanguinalis*, and there was no significant difference in control effects among the different formulations at a same dose.

Control effects for *Echinochloa crus-galli*: When a treatment was conducted at 40 mL/hm², the formulation 3 exhibited the optimal control effect of 67.12%, followed by the formulations 2, 4, and 1. When a treatment was conducted at 80 mL/hm², the formulation 2 exhibited the optimal control effect for *Echinochloa crus-galli*, followed by the formulations 4, 3, and 1. When a treatment was conducted at 160 mL/hm², the formulation 2 exhibited the optimal control effect for *Echinochloa crus-galli*, followed by the formulations 3, 4, and 1.

Control effects for *Digitaria sanguinalis*: When a treatment was conducted at 40 mL/hm², the formulation 3 exhibited the optimal control effect of 72.29%, followed by the formulations 4, 1, and 2. When a treatment was conducted at 80 mL/hm², the formulation 2 exhibited the optimal control effect, followed by the formulations 1, 4, and 3. When a treatment was conducted at 160 mL/hm², the formulation 3 exhibited the optimal control effect, followed by the formulations 4, 2, and 1.

Overall control effect for weeds: When a treatment was conducted at 40 mL/hm², the formulation 3 exhibited the optimal control effect of 69.55%, followed by the formulations 4, 1, and 2. When a treatment was conducted at 80 mL/hm², the formulation 2 exhibited the optimal control effect, followed by the formulations 3, 4, and 1. When a treatment was conducted at 160 mL/hm², the formulation 3 exhibited the optimal control effect, followed by the formulations 2, 4, and 1.

Data was processed with DPS17.05, and a 5% level difference significance test was conducted by Duncan's Multiple Range Test among the treatments.

**Table 17 Fresh weight inhibition rates for weeds on day 21 after application (%)**

| **Agent** | **Application amount mL/hm²** | ***Echinochloa crus-galli*** | | ***Digitaria sanguinalis*** | | **Overall weeds** | |
|---|---|---|---|---|---|---|---|
| | | **Control effect** | **Difference significance** | **Control effect** | **Difference significance** | **Control effect** | **Difference significance** |
| 360 g/L Clethodim EC Formulation 1 | 40 | 55.91 | g | 68.58 | bcd | 62.08 | g |
| | 80 | 73.99 | defg | 75.93 | abc | 75.55 | cdef |
| | 160 | 83.37 | abcd | 78.25 | abc | 82.30 | abc |
| 360 g/L Clethodim EC Formulation 2 | 40 | 58.15 | fg | 59.89 | d | 60.42 | g |
| | 80 | 80.24 | bcdef | 78.64 | abc | 79.55 | bcd |
| | 160 | 95.17 | ab | 79.18 | abc | 88.92 | a |
| 360 g/L Clethodim EC Formulation 3 | 40 | 67.12 | efg | 72.29 | abcd | 69.55 | defg |
| | 80 | 78.47 | cdefg | 74.25 | abcd | 77.50 | cde |
| | 160 | 95.07 | a | 86.43 | abc | 90.75 | ab |
| 360 g/L Clethodim EC Formulation 4 | 40 | 57.36 | efg | 69.20 | bcd | 63.28 | efg |
| | 80 | 78.64 | cdefg | 74.68 | abcd | 77.16 | cde |
| | 160 | 92.33 | abc | 82.56 | ab | 88.68 | a |

### Experimental conclusions:

The clethodim ECs prepared in the examples of the present disclosure have high herbicidal activities for the annual gramineous weeds of *Digitaria sanguinalis* and *Echinochloa crus-galli*, and exhibit a better control effect for *Echinochloa crus-galli* than for *Digitaria sanguinalis*. According to the comprehensive analysis of visual inspection results and fresh weight control effects, the clethodim ECs obtained according to the formulation 2 in Example 3 and the formulation 3 in Example 4 both have better quick-acting performance, a longer pesticide duration, and a better control effect for weeds than the current commercially-available 360 g/L clethodim EC (360EC).

The above are merely the preferred examples of the present disclosure, and do not limit the present disclosure in any form. It should be noted that those of ordinary skill in the art may further make several improvements and complements without departing from the present disclosure, but such improvements and complements should be deemed as falling within the protection scope of the present disclosure. Those skilled in the art may make equivalent changes such as alterations, modifications, and variations to the disclosed technical content without departing from the spirit and scope of the present disclosure, which all constitute the equivalent examples of the present disclosure. Moreover, any equivalent changes such as alterations, modifications, and variations made to the examples according to the essential technology of the present disclosure still fall within the scope of the technical solutions of the present disclosure.

## Claims

1. A first aspect of the present disclosure provides a clethodim emulsifiable concentrate (EC), comprising the following components:
| | |
|---|---|
| a clethodim technical material | 5% to 60%; |
| an anionic surfactant A | 0.1% to 5.0%; |
| an anionic surfactant B | 0.1% to 5.0%; |
| a nonionic surfactant | 1% to 20%; |
| a synergist | 0.0% to 6.0%; and |
| a solvent | 4% to 93.8%, |
wherein each percentage represents a mass percentage; the anionic surfactant A is an alkali metal salt or alkaline earth metal salt of an alkyl aryl sulfonate with a linear or branched alkyl chain; and the anionic surfactant B is a sodium sulfosuccinate diester.

2. The clethodim EC according to claim 1, wherein a content of each component is as follows:
| | |
|---|---|
| the clethodim technical material | 10% to 60%; |
| the anionic surfactant A | 0.1% to 2.0%; |
| the anionic surfactant B | 0.1% to 4.0%; |
| the nonionic surfactant | 5.0% to 10.0%; |
| the synergist | 0.1% to 3.0%; and |
| the solvent | 21.0% to 84.7%. |

3. The clethodim EC according to claim 1, wherein a mass ratio of the anionic surfactant A to the anionic surfactant B is 1:(0.5-5.0).

4. The clethodim EC according to claim 1, wherein the anionic surfactant A is sodium benzenesulfonate with a C₁₀-C₂₀ alkyl chain or calcium benzenesulfonate with a C₁₀-C₂₀ alkyl chain, and the anionic surfactant B is the sodium sulfosuccinate diester.

5. The clethodim EC according to claim 4, wherein the anionic surfactant A is one of sodium dodecylbenzenesulfonate, sodium cetylbenzenesulfonate, sodium octadecylbenzenesulfonate, calcium dodecylbenzenesulfonate, calcium cetylbenzenesulfonate, or calcium octadecylbenzenesulfonate; and the anionic surfactant B is one of sodium diisooctyl sulfosuccinate, sodium dibutyl sulfosuccinate, and sodium 1,4-diisodecyl sulfosuccinate.

6. The clethodim EC according to claim 1, wherein the nonionic surfactant is at least one of castor oil polyoxyethylene ether, rice bran oil polyoxyethylene ether, and dibenzyl biphenyl polyoxyethylene ether.

7. The clethodim EC according to claim 6, wherein the nonionic surfactant is at least one of castor oil polyoxyethylene ether EL-20, castor oil polyoxyethylene ether EL-40, and the dibenzyl biphenyl polyoxyethylene ether.

8. The clethodim EC according to claim 1, wherein the synergist is C₈-C₁₆ fatty alcohol polyoxyethylene ether.

9. The clethodim EC according to claim 1, wherein the solvent is a solvent oil.

10. A preparation method of the clethodim EC according to any one of claims 1 to 9, comprising the following steps: thoroughly mixing the clethodim technical material with the solvent in the specified proportions to produce a solution, adding the synergist, the nonionic surfactant, the anionic surfactant A, and the anionic surfactant B in the specified proportions to the solution, fully stirring for thorough mixing, and filtering to produce a transparent and clear clethodim EC.

11. A use of the clethodim EC according to any one of claims 1 to 9 in control of a plurality of gramineous weeds.
